(19) Europäisches Patentamt / European Patent Office / Office européen des brevets

(11) **EP 4 564 705 A1**

(12) **DEMANDE DE BREVET EUROPEEN**

(43) Date de publication:
**04.06.2025 Bulletin 2025/23**

(21) Numéro de dépôt: **24213194.4**

(22) Date de dépôt: **15.11.2024**

(51) Classification Internationale des Brevets (IPC):
**H04B 7/185** (2006.01) **H04W 72/50** (2023.01)

(52) Classification Coopérative des Brevets (CPC):
**H04B 7/18513;** H04L 5/003; H04W 16/14;
H04W 72/0453; H04W 72/51

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **30.11.2023 FR 2313323**

(71) Demandeur: **THALES**
**92190 Meudon (FR)**

(72) Inventeurs:
• **GOUIX, Martin**
**92622 GENNEVILLIERS CEDEX (FR)**

• **CAPDEVIELLE, Véronique**
**92622 GENNEVILLIERS CEDEX (FR)**
• **JIA, David**
**92622 GENNEVILLIERS CEDEX (FR)**
• **KHUC, Doan**
**92622 GENNEVILLIERS CEDEX (FR)**
• **KOEBERLE, Yann**
**92622 GENNEVILLIERS CEDEX (FR)**

(74) Mandataire: **Atout PI Laplace**
**Immeuble Up On**
**25 Boulevard Romain Rolland**
**CS 40072**
**75685 Paris Cedex 14 (FR)**

(54) **PLANIFICATION ET ALLOCATION DYNAMIQUE DE RESSOURCES DANS UN SYSTÈME DE COMMUNICATION PAR SATELLITE**

(57) Procédé de communication par voie satellitaire avec des équipements alloués à des utilisateurs, un territoire couvert aux fins du procédé de communication étant composé de sous-zones définies par des moyens satellitaires et associées chacune à des ressources radio allouées distinctes, dans des limites de ressources totales disponibles planifiées préalablement par une planification (100) des ressources. Le procédé de communication comprend une étape de modification (210, 250), par un gestionnaire de ressources (200), d'une attribution aux sous-zones des ressources, en réaction à la réception d'un message (T1, T2) d'un gestionnaire de mobilité (300) des utilisateurs signalant une modification de conditions de communication pour les utilisateurs dans au moins une sous-zone.

Fig. 3

EP 4 564 705 A1

**Description**

**Contexte technique**

L'invention s'inscrit dans le cadre des communications bidirectionnelles entre des stations au sol utilisant un relai satellite. De telles communications utilisent un système de transmission dont on souhaite qu'il soit sécurisé, pour ne pas que les échanges puissent être écoutés par des tiers. Ces communications sont menées avec des réseaux de modems (un modem étant défini comme un dispositif combinant les fonctions de modulation et de démodulation) auxquels est adjointe une capacité de planification. Les réseaux de modems doivent garantir une qualité de service dans toutes les situations planifiées, y compris dans des cas de forts brouillages accidentels ou délibérés. Garantir un accès au service est indispensable dans un contexte opérationnel, par exemple militaire.

Le contexte de l'invention est celui d'une couverture du sol par plusieurs faisceaux satellites, ce qui est couramment appelé communication « multi-spots », un spot étant l'empreinte au sol d'un faisceau d'un satellite donné. De plus, les stations au sol se déplacent (on dit couramment qu'elles sont en situation de mobilité) et peuvent donc quitter l'empreinte d'un faisceau et/ou entrer dans l'empreinte d'un autre faisceau.

Classiquement, la gestion du réseau implique l'allocation de ressources qui sont des bandes de fréquence, des puissances d'émission radio et des moyens matériels, consistant notamment en des modems dénombrables et qui sont qualifiées de ressources radio ou ressources satellite.

On a proposé dans l'art antérieur d'allouer la puissance en fonction de la météo, de la position en temps-réel des utilisateurs (néanmoins supposés fixes) et de la connaissance du canal instantané.

On a aussi proposé dans l'art antérieur d'effectuer une allocation dynamique de ressources pour améliorer l'équité des débits entre les utilisateurs en minimisant la différence entre la demande de trafic et la capacité.

On a aussi proposé dans l'art antérieur de dimensionner des ressources à allouer par spot en considérant le pire cas, c'est-à-dire en prévoyant le nombre maximal d'utilisateurs pour chaque spot. La planification réserve les ressources en allouant les ressources de chaque spot de façon figée et indépendante. Cela n'est pas adapté au passage à l'échelle c'est-à-dire l'augmentation du nombre de spots et de terminaux. Les ressources satellite sont sur-réservées, ce qui est coûteux dans les cas de déploiements de stations au sol denses.

On connait de US2020/0328804_A1 (aussi publié sous le numéro US11664888_B2) une répartition de bandes de fréquences dans un système multi-spots, en fonction de besoins d'utilisateurs à l'aide d'un gestionnaire centralisé.

**Définition de l'invention et avantages associés**

Les solutions connues prévoient un dimensionnement des ressources par spot en considérant le cas le plus défavorable, soit notamment le nombre d'utilisateurs par spot maximum dans tous les spots, et simultanément un débit binaire maximal et un débit symbole maximal, ces contraintes étant prises en compte indépendamment les unes des autres, mais cela n'est pas adapté à une couverture multi spots, puisqu'on sur-réserve alors les ressources, ce qui est très coûteux dans les cas de déploiement denses.

Des solutions envisagées imposent des coûts de calcul élevés, et ne sont pas transposables à l'échelle.

Ainsi, on est en manque d'une solution permettant de redistribuer, en temps réel, les ressources d'un spot à un autre tout en garantissant la qualité de service.

Pour résoudre les problèmes évoqués ci-dessus, il est alors proposé un procédé de communication par voie satellitaire avec des équipements alloués à des utilisateurs, un territoire couvert aux fins du procédé de communication étant composé de sous-zones définies chacune par des moyens satellitaires (au sens de moyens embarqué dans un satellite, en général une antenne de satellite dirigée vers ledit territoire, émettant sur plusieurs faisceaux, chaque faisceau formant une sous-zone au sol) et associées chacune à des ressources radio allouées distinctes, dans des limites de ressources totales disponibles définies préalablement par une planification de ressources.

Le procédé de communication est remarquable car il comprend une étape de modification, par un gestionnaire de ressources, d'une attribution aux sous-zones des ressources distinctes, en réaction à la réception d'un message d'un gestionnaire de mobilité des utilisateurs signalant une modification de conditions de communication pour un ou des utilisateurs dans au moins une sous-zone, la planification de ressources ayant préalablement défini lesdites limites des ressources totales disponibles dans un logique de mutualisation de ressources entre les sous-zones compatible avec différentes attributions des ressources distinctes.

Ce procédé apporte efficacité et économie de ressources tout en garantissant la qualité des services dans un contexte multi spots. Il fournit une mise en oeuvre dynamique et agile pour s'adapter à la mobilité des stations entre spots. Il permet une optimisation de l'allocation des puissances et du spectre, selon un critère qui peut s'adapter selon les besoins opérationnels, comme par exemple la diminution d'une puissance totale émise.

Selon des caractéristiques avantageuses et optionnelles,

- lesdites ressources peuvent comprendre des moyens de démodulation distincts ainsi qu'une puissance distincte et une bande spectrale distincte pour émission et réception par voie satellitaire, et se situent dans des limites de moyens de démodulation disponibles, de puissance disponible et de bande spectrale disponible.
- le gestionnaire de la mobilité des utilisateurs sur le territoire peut recevoir des messages de gestionnaires de sous-zones signalant, pour un gestionnaire de sous-zone associé à une sous-zone donnée, par exemple

    a. un déplacement d'au moins un utilisateur hors de la sous-zone donnée ou une entrée d'un utilisateur dans la sous-zone donnée, ou

    b. une modification d'une qualité de service demandée dans la sous-zone donnée, ou signalant une modification d'une condition atmosphérique ou d'un phénomène de brouillage ou d'interférences affectant les transmissions radio dans la sous-zone donnée, ou encore

    c. un changement de bande de fréquence de communication initiée par un utilisateur dans la sous-zone donnée.

- l'étape de modification peut comprendre un calcul fondé sur une fonction objectif d'allocation visant une maximisation de capacité de transmission, une maximisation de l'efficacité énergétique, une équité entre sous-zones, ou une économie de moyens matériels, à l'échelle de tout ou partie desdites sous-zones.
- une planification des ressources peut être effectuée en amont d'un engagement des communications selon ledit procédé.
- le gestionnaire de ressources peut établir une nouvelle attribution en résolvant un problème de bin-packing mono ou multidimensionnel formulé au sein de chaque sous-zone, au vu dudit message du gestionnaire de mobilité.

L'invention consiste aussi en un système de communication par voie satellitaire comprenant des équipements alloués à des utilisateurs, un territoire couvert par le système de communication étant composé de sous-zones définies chacune par des moyens satellitaires et associées chacune à des ressources radio allouées distinctes, dans des limites de ressources totales disponibles.

De manière remarquable, le système de communication étant caractérisé en ce qu'il comprend un gestionnaire de ressources configuré pour attribuer aux sous-zones des ressources, en réaction à la réception d'un message d'un gestionnaire de mobilité, compris dans le système de communication, configuré pour signaler au gestionnaire de ressources une modification de conditions de communication pour les utilisateurs dans au moins une sous-zone.

- optionnellement, mais avantageusement, le système de communication peut comprendre un calculateur d'allocation dynamique au sein du gestionnaire de ressources et un calculateur de planification en amont du gestionnaire de ressources qui mettent en oeuvre des méthodes de calcul heuristiques pour déterminer une allocation de ressources radio auxdits sous-zones.

Pour assurer un fonctionnement amélioré du réseau, l'invention propose que l'allocation à chaque spot des ressources radio incluant des moyens matériels (nombre de modems), des puissances d'émission et de la bande spectrale soit faite en sorte d'économiser les ressources tout en garantissant une qualité de service exigée pour l'ensemble des communications sur la zone de mobilité. Cela passe par l'amélioration de la planification des ressources en déterminant en amont les ressources radio minimales nécessaires pour garantir les performances avec un niveau de qualité de service donné, en prenant en compte une possibilité de partage des ressources sur l'ensemble des spots et en prévoyant d'exploiter une telle mutualisation de ces ressources entre les spots. Cela passe aussi par une allocation dynamique (en temps réel) des ressources inter-spots en prenant en compte notamment les besoins des stations variant dans le temps (du fait notamment de la mobilité des stations passant d'un spot à un autre, ou se déplaçant au sein d'un spot) et les conditions de l'environnement comme la présence de brouillage et/ou des conditions météorologiques défavorables.

L'invention permet d'optimiser la planification et l'allocation ou la réallocation en temps réel de ces ressources, tout en garantissant l'accès aux services. Elle propose une solution globale combinant une planification multi spots qui prévoit une mutualisation des ressources sur les spots, avec une solution d'allocation et distribution dynamique de ces ressources sur les spots. Ces ressources sont réallouées dès changement de distribution spatiale du trafic sur les spots. La solution permet ainsi d'économiser les ressources nécessaires.

La solution est optimisée en ressources, plus robuste vis-à-vis du brouillage et des interférences et adaptée aux besoins variables dans le temps lié à la mobilité des stations. La solution est dynamique et agile. Les communications sont de plus protégées en mobilité.

**Liste des figures**

La figure 1 présente une allocation de ressources selon l'art antérieur.

La figure 2 présente une allocation de ressources selon une mise en oeuvre d'un mode de réalisation de l'invention.

La figure 3 présente une architecture d'implémentation des principes de l'invention.

La figure 4 présente une séquence de mise en oeuvre d'un mode de réalisation de l'invention.

**Description détaillée**

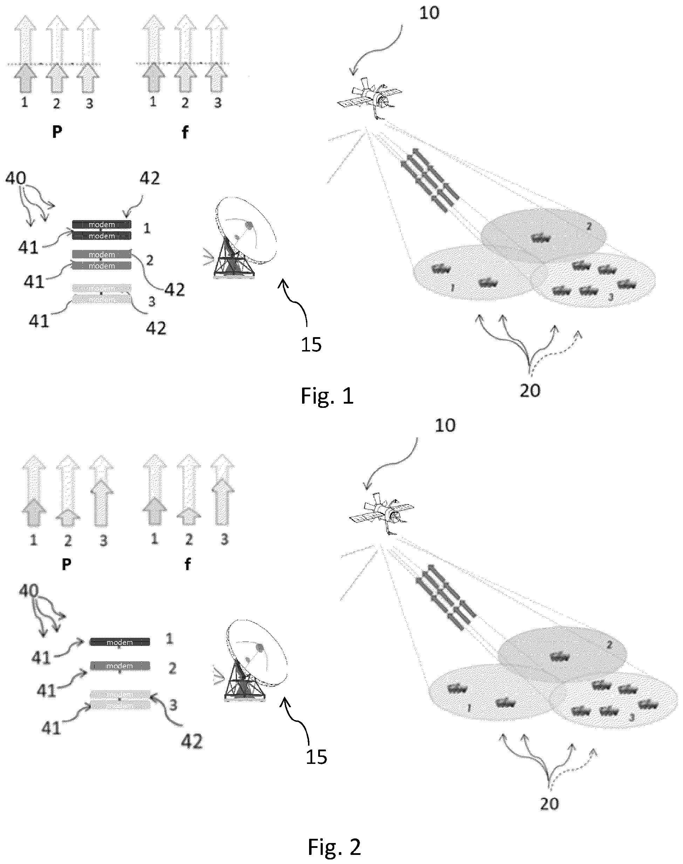

[Fig. 1] En figure 1, on a représenté une configuration selon l'art antérieur, qui implique comme on va le voir une sur-réservation des ressources satellites. L'allocation des ressources est en effet statique.

Un satellite 10 est en orbite au-dessus d'une zone de la planète, qui comprend la zone de mobilité des stations de communication de différents utilisateurs d'un réseau de communication.

La zone de mobilité est recouverte par plusieurs spots 1, 2, 3 (le nombre de spots peut être plus élevé), et d'autres spots peuvent être également présents. Le terme spot désigne une zone couverte par un faisceau émis par un satellite, ici le satellite 10, ou plus précisément par la ou les antennes du satellite. Les spots peuvent se chevaucher.

Le réseau de communication comprend une station de contrôle 15 qui communique avec le satellite 10, et qui a un rôle de contrôle et de gestion. La station de contrôle 15 peut être en dehors des spots.

Des stations utilisateur 20 sont déployées au sol ou à proximité du sol - et en tout cas pas en orbite comme le satellite 10. Certaines stations utilisateur 20 se déplacent de manière à passer par exemple d'un spot 1, 2, 3 à un autre, en étant parfois dans une zone commune à deux spots, et en quittant parfois un spot dans lequel elle était initialement présente pour rejoindre un autre spot. Ainsi, les stations sont non uniformément réparties sur les spots et leur répartition spatiale sur les spots est variable dans le temps y compris rapidement.

Sur la figure il y a respectivement 2, 1 et 5 stations utilisateur 20 dans les spots 1, 2 et 3. Elles sont représentées sous la forme de véhicules militaires terrestre, mais il peut s'agir de piétons, d'avions ou de bateaux.

La station de contrôle 15 est, comme les stations utilisateur 20 déployée au sol ou à proximité du sol - et en tout cas pas en orbite comme le satellite 10.

Des contrôleurs de réseau 40 (en anglais : network controllers ou NC) mis en oeuvre localement au sein de la station de contrôle 15 gèrent les opérations d'ordonnancement et gèrent les ressources, chacun pour un spot différent, dans le cadre d'un réseau local virtuel satVLAN associé au spot concerné.

Chaque spot est orchestré par un contrôleur de réseau 40 distinct de la station de contrôle 15. Un contrôleur de réseau 40 comprend un premier modem 41 et éventuellement d'autres modems 42 (le premier modem et chacun des autres modems constituent des capacités de démodulation distinctes), qui servent à augmenter les capacités de démodulation de la station.

Quand une station 20 est dans un spot particulier, et sauf cas de chevauchement, elle ne peut pas communiquer avec les contrôleurs de réseau 40 qui contrôlent les autres spots dans la station de contrôle 15. Ainsi, elle ne peut être contrôlée que par le contrôleur de réseau 40 du spot dans lequel elle se trouve, et peut transmettre des données à ce contrôleur de réseau 40 uniquement.

Comme cela est représenté sous la forme de flèches sur la partie gauche du schéma, la bande de fréquences f et la puissance satellite P (en termes de puissance isotrope rayonnée équivalente PIRE) allouées à chaque spot sont des fractions identiques de, respectivement, la bande totale et de la puissance satellite totale, disponibles pour l'ensemble du réseau satellitaire. Toute la bande et toute la puissance sont généralement allouées, naturellement. Ici, ces fractions sont donc d'un tiers, puisque trois spots sont définis.

On a prévu un autre modem 42 pour chaque spot, ce qui constitue un dimensionnement prêt à gérer la situation dans laquelle toutes les stations utilisateur 20 (ici les 8 stations utilisateur 20) seraient présentes simultanément dans le même spot, sans qu'on prévoie la moindre réallocation de ces autres modems. Il y a ici trois autres modems 42, l'un pour le spot 1, l'autre pour le spot 2, et le troisième pour le spot 3, chacun comprenant plusieurs démodulateurs. Le nombre de spots et le nombre de modems sont néanmoins présentés uniquement pour illustration, sans qu'ils n'aient vocation à définir l'invention.

Au final, du fait du caractère statique de l'allocation de ressources, il y a une surréservation de celles-ci.

[Fig. 2] En figure 2, on a représenté une allocation dynamique des ressources satellites.

A un instant donné, où il y a comme précédemment respectivement 2, 1 et 5 stations utilisateur 20 dans les spots 1, 2 et 3, on alloue un autre modem 42 au contrôleur de réseau 40 du spot 3 dans la station de contrôle 15, puisque c'est le spot 3 qui couvre le plus grand nombre de stations utilisateur 20. Et on n'en alloue pas (aucun) aux contrôleurs de réseau 40 des spots 1 et 2 car ils n'en ont pas besoin, leurs premiers modems 41 étant suffisants pour prendre en charge les stations couvertes par ces spots à l'instant concerné, qui sont en nombres limités, puisque de seulement 2 et 1 respectivement.

Toujours de manière dynamique, la bande de fréquence f allouée à chaque spot est une fraction variable et différente d'un spot à l'autre de la bande totale disponible à l'échelle du réseau satellitaire et la puissance P (en termes de puissance isotrope rayonnée équivalente) allouée à chaque spot est une fraction variable et différente d'un spot à l'autre de la puissance disponible. Toute la bande et toute la puissance sont généralement allouées, comme précédemment. Comme cela est représenté sous la forme de flèches sur la partie centrale du schéma, ici, les fractions sont les plus importantes pour le spot 3, les plus faibles pour le spot 2, et intermédiaires entre celles de ces deux spots 2 et 3 pour le spot 1, puisque c'est le spot 3 qui couvre le plus grand nombre de stations, et le spot 2 qui en couvre le plus petit nombre.

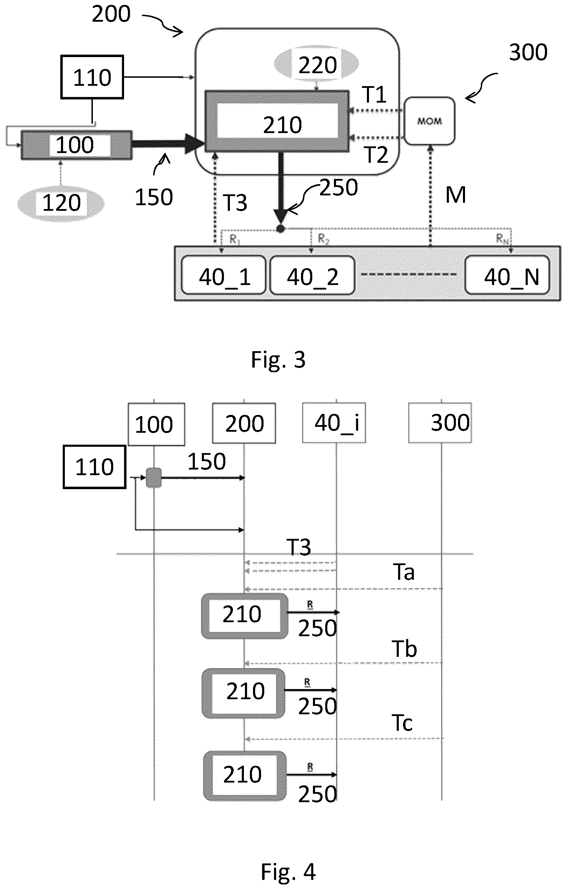

[Fig. 3] En figure 3, une nouvelle architecture d'allocation des ressources entre plusieurs spots est présentée. Elle permet une planification multi-spots qui, s'appuyant sur une allocation dynamique des ressources, gaspille moins de ressource que les solutions existantes, et une allocation des ressources dynamique en temps réel qui n'existait pas dans ce contexte auparavant.

Cette architecture permet les étapes de, dans un premier temps, planification menée par un calculateur de planification 100, puis dans un deuxième temps d'allocation dynamique des ressources, ainsi que de déclenchement (« triggers », qui sont des messages de signalisation) qui entraînent des échanges de signalisation entre les stations déployées (les stations utilisateur 20 de la figure 2) et un orchestrateur 200 chargé d'orchestrer les ressources des réseaux.

La planification vise à fournir en amont du déploiement un budget maximal de ressources à allouer. Par ressources, on entend les puissances d'émission, les bandes spectrales et les moyens matériels.

La planification est mise en oeuvre dans le calculateur de planification 100 qui prend en entrée des éléments de configuration statique 110 comprenant les données liées à la configuration statique comme la topologie des spots, les besoins de qualité de service par station, les contraintes de transmission multidimensionnelles (débits binaires, débits symboles, ...), le nombre de stations déployées et les méthodes d'accès utilisées (e.g. Time Division Multiple Access, TDMA). D'autres paramètres peuvent être pris en compte pour la planification.

Cette planification des ressources vise à déterminer des ressources radio minimales nécessaires pour garantir les performances avec un niveau de qualité de service, et à prendre en compte le fait que les ressources doivent être partagées à travers les différents spots, alors qu'actuellement on fait une surréservation des ressources spot par spot.

L'un des objectifs poursuivi par la planification, qui est exprimé sous la forme d'une fonction objective (ou fonction d'objectif) de planification 120 est d'améliorer la planification, c'est-à-dire de minimiser les ressources pour assurer une qualité de service exigée pour l'ensemble des communications sur la zone de mobilité.

Des objectifs ou contraintes d'optimisation autres sont considérés dans certaines variantes. Ces objectifs exprimés sous la forme de la fonction objective (ou fonction d'objectif) de planification 120 peuvent viser une meilleure résistance au brouillage sur certaines zones géographiques, ou encore privilégier l'optimisation d'autres critères tels que la capacité, l'efficacité énergétique, l'équité entre les spots, l'économie des batteries. D'autres objectifs ou contraintes sont envisagés.

Des contraintes peuvent être définies différemment selon le type de ressources, selon les spots et les zones géographiques, comme par exemple pour tenir compte de l'existence et de la localisation de zones géographique de sensibilité particulière au brouillage.

L'objectif de la planification peut intégrer des hypothèses particulières de zones de mobilité des utilisateurs entre les spots selon le profil de mobilité des stations. Ainsi, les stations peuvent être connues comme ne quittant pas un spot, peu mobiles d'un spot à l'autre, ou au contraire très mobiles entre les spots.

L'objectif d'optimisation peut aussi introduire une distinction selon la zone géographique des stations dans les spots. Par exemple, selon une probabilité de présence dans le spot.

Le calculateur de planification 100 définit ainsi un budget de ressources allouées 150.

L'orchestrateur 200 reçoit les éléments de configuration statique 110, et également des informations par spot en temps-réel comme des données radio liées au canal de propagation (météo, interférences, brouilleur...). Il reçoit aussi des messages de déclenchement ou trigger.

On appelle trigger un message indiquant une modification significative au niveau des stations déployées. Suite à la réception d'un trigger par l'orchestrateur 200, les ressources (toutes les ressources ou un sous-ensemble de ressources défini par un type de ressources, comme par exemple les bandes de fréquence, les matériels, les puissance allouées) sont distribuées aux spots de façon conjointe à l'ensemble des spots à l'aide d'un calculateur d'allocation dynamique 210 des ressources qui prend en compte le changement indiqué à l'orchestrateur 200 dans le trigger.

Le calculateur d'allocation dynamique 210 a initialement reçu un budget de ressources allouées 150 défini par le calculateur de planification 100.

Le calculateur d'allocation dynamique 210 distribue c'est à dire alloue de manière dynamique (en temps réel) les ressources radio en prenant en compte les besoins qui varient dans le temps (du fait notamment de la mobilité des stations déployées), et les conditions de l'environnement comme la présence de brouillage et/ou la météo.

Les triggers sont envoyés à l'orchestrateur 200 par un gestionnaire de mobilité (MObility Manager ou MOM en anglais) 300. De manière générale, l'orchestrateur 200 et le gestionnaire de mobilité 300 ont des échanges de signalisation.

Le gestionnaire de mobilité 300 communique directement avec les contrôleurs de réseau 40 (voir figure 2) ou 40_1, 40_12, ... 40_N qui lui fournissent les informations en temps-réel liés à leur spot, par des messages M.

Deux exemples de triggers sont décrits.

Le Trigger 1 T1 est envoyé par le gestionnaire de mobilité 300 à l'orchestrateur 200 quand il y a un changement de la répartition spatiale des stations dans les spots.

Le Trigger 2 T2 est envoyé par le gestionnaire de mobilité 300 à l'orchestrateur 200 quand la capacité s'avère insuffisante sur un spot. Cela peut être lié à un changement de qualité de service ou de débit binaire, ou un changement sur les conditions radio, par exemple.

Ces informations, spot par spot, parviennent au gestionnaire de mobilité 300 sous la forme de messages M et le gestionnaire de mobilité 300 en fait une synthèse, et génère un trigger T1 ou T2 si et quand cela est adapté, au vu d'une compréhension globale des conditions de transmission radio dans les spots, telle qu'obtenue par l'agrégat des messages M successifs (y compris à partir d'un unique message M, si le contenu de celui-ci est suffisant pour justifier l'émission d'un trigger T1 ou T2).

Les passages d'une bande de fréquences à une autre sont équivalents à un transfert intercellulaire (Handover en anglais). Ils sollicitent le gestionnaire de mobilité 300 qui reçoit un message M. Par exemple, si une station passe d'une configuration de bande Ka à la bande X, le gestionnaire de mobilité 300 est sollicité par la réception d'un message M. En effet, changer de bande de fréquences, pour une station, fait quitter à la station un sous-réseau de modems pour qu'elle se connecte à un autre sous-réseau de modems. Il est donc utile de transférer des ressources radio du sous-réseau quitté au sous-réseau rejoint.

Comme pour la planification menée par le calculateur de planification 100, la politique de distribution des ressources menée par le calculateur d'allocation dynamique 210 peut aussi être pré-configurée, par exemple par l'opérateur du réseau satellite, et viser à l'aide d'une fonction objective d'allocation 220 une maximisation de capacité, une maximisation de l'efficacité énergétique, une équité entre les spots, une économie des batteries, ou d'autres objectifs.

On prend en compte la mutualisation de l'ensemble des ressources (matériel, puissance et spectre) entre tous les spots ou sous réseaux satellite.

Dans une variante, un Trigger 3 T3 est envoyé à l'orchestrateur 200 par un contrôleur de réseau 40 et contient des informations en temps réel portant sur le spot concerné spécifiquement comme les éléments de météorologie locale, la propagation locale des ondes radio autour du spot ou encore des besoins en qualité de service (QoS) spécifiques et mis à jour à la date et l'heure et instant concernés, au spot.

Une fois les ressources allouées par le calculateur d'allocation dynamique 210, l'orchestrateur 200 transmets les allocations décidées à chaque contrôleur de réseau 40 par un message d'allocation de ressources 250.

[Fig. 4] On met en place l'architecture ainsi proposée. La figure 4 présente le déroulement séquentiel lors du déploiement de cette architecture.

Durant la phase de planification : sur la base d'éléments d'informations (statiques) 110 sur la configuration ou la topologie, le module de planification multi-spots 100 calcule le budget ressources alloué à l'ensemble des spots et envoie cette information 150 à l'orchestrateur de ressources temps réel.

Durant la phase opérationnelle d'allocation ou de re-allocation des ressources : l'orchestrateur 200 de ressources distribue dynamiquement ce budget de ressources aux différents contrôleurs de réseau 40_i, par l'allocation dynamique 250 transmise par le calculateur d'allocation dynamique 210.

Cette opération est exécutée sur la base d'informations Ta, Tb, Tc fournies par le gestionnaire de mobilité (MObility Manager) 300, notamment la distribution des stations sur les spots, et à partir d'informations radio T3 fournies en temps réel par chaque contrôleur de spot, notamment les conditions radio, la météo, ....

La réallocation des ressources entre spots est déclenchée par 2 triggers notifiant un changement de distribution spatiale ou encore une insuffisance de capacité sur un spot et qui sont ici les informations Tb et Tc.

**Principes mis en oeuvre**

Dans un mode de réalisation, on optimise uniquement la ressource matérielle (c'est-à-dire le nombre de modems, et plus précisément le nombre d'autres modems 42, (voir figure 2). Les autres ressources à allouer, notamment la puissance et la bande de fréquence sont fixes et dimensionnées indépendamment dans chaque spot. Toujours dans ce mode de réalisation, chaque modem possède des contraintes de débits maximum en réception. On n'impose pas de contrainte sur le débit binaire, mais uniquement sur le débit symbole (mais on pourrait faire le contraire, ou imposer des contraintes simultanément sur ces deux débits). De plus, chaque contrôleur de réseau 40 (voir figure 2) comprend le modem principal (qui est unique) et un nombre quelconque, pouvant être 0, d'autres modems, les débits symboles des stations sont indépendants du spot dans lesquels se situent les stations à chaque instant, et l'émission par une station à laquelle des ressources radio sont allouées, est faite en continu (pas d'accès par répartition temporelle TDMA dans ce mode de réalisation). Chaque modem a pour rôle, notamment, de démoduler les porteuses émises par les stations déployées dans les spots.

On souhaite allouer les porteuses reçues par le contrôleur de réseau 40 à des moyens matériels en utilisant le moins de modems possibles.

Les contraintes liées aux modems sont le fait que chaque modem a une capacité maximale en débit symbole et/ou en débit binaire, et le fait qu'un modem ne peut démoduler qu'un nombre maximal de porteuses, c'est-à-dire ne peut prendre en charge qu'un nombre limité de stations.

Lors de l'étape de planification, le nombre de stations à déployer est connu, mais pas leur répartition dans les spots puisqu'elle varie au cours du temps après le déploiement initial.

Une solution existante considère le cas de répartition le plus défavorable, soit un nombre maximal d'utilisateurs par spot. L'algorithme existant calcule ensuite pour chaque spot le nombre de modems nécessaire pour ce cas de répartition le plus défavorable.

On veut néanmoins déterminer dans chaque spot la répartition des stations dans les modems en utilisant le moins de modems possible. Résoudre ce problème est équivalent à résoudre un problème de bin-packing, variante du problème du sac à dos, qui est un problème combinatoire. Il est proposé ici d'utiliser des heuristiques, des algorithmes génétiques, ou des méthodes d'apprentissage par renforcement pour donner une solution approximative.

Dans un exemple de 8 stations réparties sur 3 spots, on calcule le nombre de modems nécessaires en considérant 8 stations dans un spot. Si ce nombre est 3 par exemple, comme il y a 3 spots, la solution existante planifierait 9 modems en tout. Comme cette méthode de planification mono-spot gaspille une grande quantité de modems, on propose ici une nouvelle solution de planification multi-spots.

Détails du calculateur de planification 100 et du calculateur d'allocation dynamique 210 dans un exemple de réalisation

**Planification**

La planification effectuée par le calculateur de planification 100 prend en compte la mutualisation de l'ensemble des ressources entre tous les spots (ou sous réseaux satellite) grâce à une solution de distribution des ressources décrite ici, pour minimiser les ressources tout en assurant une qualité de service exigée pour l'ensemble des communications sur la zone de mobilité.

D'autres objectifs ou contraintes d'optimisation au stade de la planification sont pris en compte dans différentes variantes, comme la résistance au brouillage sur certaines zones géographiques, ou un choix d'optimisation de l'utilisation de certaines ressources au détriment de l'utilisation d'autres.

L'objectif d'optimisation au stade de la planification peut imposer des contraintes spécifiques à chaque type de ressources (voire par spot ou zone géographique), comme la présence d'une zone de sensibilité particulière au brouillage.

Cet objectif d'optimisation au stade de la planification peut intégrer des hypothèses particulières relatives à des zones de mobilité des utilisateurs entre les spots selon le profil de mobilité des stations (fixes dans un spot, peu ou très mobiles entre les spots). L'objectif d'optimisation peut introduire une distinction selon la zone géographique des utilisateurs dans les spots.

Une heuristique mise en oeuvre dans un mode de réalisation, pour la planification, implique une planification optimisée du nombre de modems en surdimensionnant les débits symboles au lieu du nombre de stations. Il en résulte une diminution de la surréservation des modems, et une diminution de la complexité. Il en résulte aussi une possibilité de passage à l'échelle grâce au surdimensionnement des débits symboles

Il est ainsi proposé une heuristique exploitant la mutualisation multi-spots des ressources. On surdimensionne donc les débits symboles plutôt que le nombre de stations.

L'heuristique contient deux étapes : une étape de génération d'un tableau réduit des possibilités de répartition des spots et une étape de calcul du nombre de modems requis pour ces possibilités.

Soit $n_{UE}$ le nombre de stations à déployer et M le nombre de spots.

L'heuristique prend en compte toutes les répartitions possibles des stations dans les spots constituées de $n_{UE}$ stations et diminue le nombre de cas possibles en considérant le cas le plus défavorable en termes de débit symbole.

A titre d'exemple, on considère $n_{UE}$ = 8 stations et M = 3 spots. Les 8 débits des stations sont dans l'exemple, dans l'ordre décroissant 5 MBd, 4 MBd, 4 MBd, 3 MBd, 2 MBd, 1 MBd, 1 MBd et 1 MBd.

La notation $(p_1, p_2, p_3)$ signifie qu'il y a respectivement $p_1$, $p_2$, $p_3$ stations réparties dans les spots 1, 2, 3.

On considère la répartition (6,1,1). Il y a 6 stations dans le premier spot, 1 dans le second et une dans le troisième, ce qui correspond au total annoncé de 8 stations.

Comme chaque station peut avoir un débit symbole associé différent, la répartition (6,1,1) englobe donc un grand nombre de possibilités de répartition des stations dans les spots. Pour diminuer ce nombre de possibilités, une solution consiste à sur-dimensionner les débits symboles en considérant la notation suivante : $[6_{max}, 1_{max}, 1_{max}]$, où $p_{max}$ avec p entier naturel désigne les p stations avec les débits symboles les plus élevés parmi les $n_{UE}$ stations déployées. La répartition $[6_{max}, 1_{max}, 1_{max}]$ signifie qu'on considère les 6 stations aux débits symboles les plus élevés dans un premier spot. Ces 6 débits les plus élevés sont 5 MBd, 4 MBd, 4 MBd, 3 MBd, 2 MBd et 1 MBd dans l'exemple.

La station au débit le plus élevé, en l'occurrence, 5 MBd est placée également dans le spot 2. Elle est également placée dans le spot 3. Elle est donc artificiellement placée trois fois.

Les deux stations avec les débits les plus faibles ne sont placées dans aucun spot. Ici il s'agit de deux stations avec le débit 1 MBd.

Cette approche peut s'appliquer aux spots 1, 2, 3 dans cet ordre, mais aussi 1, 3, 2, ou bien 2, 1, 3, ...

Dans la suite, la notation $[6_{max}, 1_{max}, 1_{max}]$ indique la répartition suivante : les 6 stations avec les plus hauts débits symboles dans un spot A, la station avec le plus haut débit symbole également dans le spot B et également dans le spot C.

En utilisant l'approche décrite, le nombre de possibilités de répartition à considérer est fortement diminué.

Dans la table suivante, on liste une partie de l'ensemble des possibilités de répartition dans les spots A, B, C :

[Tab.1] Le tableau 1 présente un exemple de répartition de l'heuristique de planification selon un mode de réalisation pour 8 stations et 3 spots.

| Répartition n° | Spot A | Spot B | Spot C |
|---|---|---|---|
| 1 | $8_{max}$ | $0_{max}$ | $0_{max}$ |
| 2 | $7_{max}$ | $1_{max}$ | $0_{max}$ |
| 3 | $6_{max}$ | $2_{max}$ | $0_{max}$ |
| 4 | $6_{max}$ | $1_{max}$ | $1_{max}$ |
| 5 | $5_{max}$ | $3_{max}$ | $0_{max}$ |
| 6 | $5_{max}$ | $2_{max}$ | $1_{max}$ |
| 7 | $4_{max}$ | $4_{max}$ | $0_{max}$ |
| ... | | | |

La première phase de l'heuristique consiste donc à générer ce tableau. Cela peut se faire avec, dans un mode de réalisation, un algorithme itératif. Il est possible de générer ce tableau pour $n_{UE}$ = 100 stations et M = 7 spots en 2 minutes.

La deuxième phase de l'heuristique consiste à calculer le nombre de modems pour les répartitions de stations dans les spots indiqué dans le Tableau 1.

L'idée est d'appliquer une méthode de résolution de bin-packing dans les configurations données. Cela peut être fait avec un algorithme de first-fit decreasing (FFD), de next-fit, ou de best-fit. L'heuristique FFD est avantageuse du fait de sa rapidité d'exécution.

Par la suite, on note BPP($n_{max}$) le nombre de modems requis calculé avec la méthode de résolution du problème de bin-packing pour les $n_{max}$ stations avec les plus hauts débits.

Le nombre de modems planifié $ME_{plan,i}$ pour une répartition i fournie dans le tableau généré peut donc être calculé de la façon suivante :

$$ME_{plan,i} = \sum_{m=1}^{M} BPP(n_{m,max}),$$

où $BPP(0_{max}) = 1$

En effet il faut au moins un modem par spot et $n_{m,max}$ correspond au nombre de stations considérés (celles avec les plus hauts débits) dans le spot m.

Pour la répartition $[6_{max}, 1_{max}, 1_{max}]$, le nombre de modems planifié est donc :

$$ME_{plan,i} = BPP(6_{max}) + BPP(1_{max}) + BPP(1_{max})$$

Le nombre de modems planifié est ensuite déterminé en prenant le cas le plus défavorable parmi les répartitions possibles indiqué par le tableau généré, soit :

$$ME_{plan} = \max_i ME_{plan,i}$$

Le nombre de modems planifié ME_max est toujours supérieur au nombre total de modems requis en temps-réel, pour toutes les répartitions possibles des stations dans les spots. Cette affirmation peut être prouvée mathématiquement.

Autre solution pour la planification

Une heuristique mise en oeuvre dans un autre mode de réalisation, toujours pour la planification, utilise un apprentissage par renforcement. Cela est proposé ici, car le problème traité a été identifié comme étant un problème d'optimisation combinatoire et modélisé avec un processus décisionnel markovien.

**Allocation dynamique**

En réaction à la réception par le calculateur d'allocation dynamique d'un trigger, des ressources, qui peuvent être les ressources de tous les types de ressources ou un sous ensemble des ressources, sont allouées ou réallouées aux spots.

Dans le cas du **trigger T2** (voir figure 3), il y a une capacité sur un spot qui s'avère insuffisante, du fait d'un changement de qualité de service requis ou d'un changement de débit binaire.

Il est nécessaire de réallouer un nombre de modems adapté à la garantie de la qualité de service requise. On suppose dans l'exemple considéré que la puissance d'émission et les bandes de fréquences sont fixes et surdimensionnées, et qu'on connait les contraintes propres aux modems considérés : à savoir un nombre de porteuses maximum et des débits symboles maximum fixés.

Pour chaque spot, le problème de la répartition des stations dans les modems est résolu par l'une des heuristiques next fit, best fit, ou first fit.

Dans une variante, la répartition est résolue par apprentissage par renforcement appliqué au 3D bin packing, en prenant en compte la dimension du débit binaire, des symboles et d'autres paramètres.

Dans le cas du **trigger T1** (voir figure 3), il y a un changement de répartition spatiale des stations dans les spots, qui est notifié au calculateur d'allocation dynamique par le gestionnaire de mobilité. Il s'agit donc d'un changement de la répartition en temps-réel des stations dans les spots.

Une solution d'allocation dynamique des ressources est choisie en résolvant un problème de bin-packing au sein de chaque spot. La résolution du problème de bin-packing s'effectue en utilisant l'heuristique FFD, ou une autre heuristique avec un temps d'exécution faible.

Dans une situation pour n_UE=8 stations et M=3 spots et où en temps réel, les stations 1, 2 et 3, se trouvent dans le spot 1 avec des débits (débits symbole) de 4, 3 et 5 MBb respectivement, les stations 4, 5 et 6 sont dans le spot 2 avec des débits de 1, 2 et 4 MBb respectivement et que les stations 7 et 8 se trouvent dans le spot 3, avec des débits de 1 et 1 MBb respectivement, il est choisi d'allouer un autre modem 42 au contrôleur de réseau 40_1, et aucun aux contrôleurs de réseau 40_2 et 40_3.

Une variante de trigger T1 peut être transmise du fait d'informations de handover d'une bande fréquentielle vers une autre, dans le cas de spot multi-bandes. Un tel trigger est également notifié au calculateur d'allocation dynamique par le gestionnaire de mobilité.

Dans le cas du trigger T3, il y a par exemple un changement de conditions radio.

Là aussi, pour chaque spot, le problème de la répartition des stations dans les modems est résolu par une heuristique ou un apprentissage par renforcement.

L'invention peut se généraliser en considérant plusieurs caractéristiques en plus ou à la place du débit symbole et en résolvant un problème de bin-packing multidimensionnel.

**Commentaires généraux**

De manière générale, on précise que l'optimisation de l'allocation des ressources tient aussi compte, dans certains modes de réalisation, des méthodes d'accès utilisées par les stations, comme par exemple le TDMA (technique d'accès multiple par répartition temporelle).

Par ailleurs, on a parlé dans le présent exposé des moyens de démodulation, mais il faut avoir à l'esprit que ceux-ci sont accompagnés de moyens de réception, et par ailleurs de moyens de modulation et d'émission.

**Revendications**

1. Procédé de communication par voie satellitaire avec des équipements (20) alloués à des utilisateurs, un territoire couvert aux fins du procédé de communication étant composé de sous-zones (1, 2, 3 ...) définies par des moyens embarqués dans un satellite (10) et associées chacune respectivement à des ressources radio allouées distinctes, dans des limites de ressources totales disponibles définies préalablement par une planification de ressources, le procédé de communication étant **caractérisé en ce qu'**il comprend une étape de modification (210, 250), par un gestionnaire de ressources (200), d'une attribution aux sous-zones (1, 2, 3, ...) des ressources distinctes, en réaction à la réception d'un message (T1, T2) d'un gestionnaire de mobilité (300) des utilisateurs signalant une modification de conditions de communication dans au moins une desdites sous-zones (1, 2, 3, ...), la planification de ressources ayant préalablement défini lesdites limites des ressources totales disponibles dans une logique de mutualisation de ressources entre les sous-zones (1, 2, 3, ...) compatible avec différentes attributions des ressources distinctes.

**2.** Procédé de communication par voie satellitaire selon la revendication 1, **caractérisé en ce que** lesdites ressources comprennent des moyens de démodulation distincts (40) ainsi qu'une puissance distincte (P) et une bande spectrale distincte (f) pour émission et réception par voie satellitaire, et se situent dans des limites de moyens de démodulation disponibles, de puissance disponible et de bande spectrale disponible.

**3.** Procédé de communication par voie satellitaire selon la revendication 1 ou la revendication 2, **caractérisé en ce que** le gestionnaire de la mobilité (300) des utilisateurs sur le territoire reçoit des messages (M) de gestionnaires de sous-zones (40 ; 40_i) signalant, pour un gestionnaire de sous-zone (40 ; 40_i) associé à une sous-zone donnée (1, 2, 3, ...), un déplacement d'au moins un utilisateur hors de la sous-zone donnée (1, 2, 3, ...) ou une entrée d'un utilisateur dans la sous-zone donnée (1, 2, 3, ...), ou signalant une modification d'une qualité de service demandée dans la sous-zone donnée (1, 2, 3, ...), ou signalant une modification d'une condition atmosphérique ou d'une phénomène de brouillage ou d'interférences affectant les transmissions radio dans la sous-zone donnée (1, 2, 3, ...), ou signalant un changement de bande de fréquence de communication initiée par un utilisateur dans la sous-zone donnée (1, 2, 3, ...).

**4.** Procédé de communication par voie satellitaire selon l'une des revendications 1 à 3, **caractérisé en ce que** l'étape de modification (210, 250) comprend un calcul (210) fondé sur une fonction objective d'allocation (220) visant une maximisation de capacité de transmission, une maximisation de l'efficacité énergétique, une équité entre sous-zones, ou une économie de moyens matériels, à l'échelle de tout ou partie desdites sous-zones.

**5.** Procédé de communication par voie satellitaire selon l'une des revendications 1 à 4, **caractérisé en ce que** le gestionnaire de ressources (200) établit une nouvelle attribution en résolvant un problème de bin-packing mono ou multidimensionnel formulé au sein de chaque sous-zone (1, 2, 3, ...), au vu dudit message (T1, T2) du gestionnaire de mobilité (300).

**6.** Système de communication par voie satellitaire comprenant des équipements alloués (20) à des utilisateurs, un territoire couvert par le système de communication étant composé de sous-zones (1, 2, 3, ...) définies par des moyens embarqués dans un satellite (10) du système et associées chacune à des ressources radio allouées distinctes, dans des limites de ressources totales disponibles définies préalablement par un calculateur de planification (100) de ressources, le système de communication étant **caractérisé en ce qu'**il comprend un gestionnaire de ressources (200) configuré pour attribuer aux sous-zones (1, 2, 3, ...) des ressources, en réaction à la réception d'un message (T1, T2) d'un gestionnaire de mobilité (300), compris dans le système de communication, configuré pour signaler au gestionnaire de ressources (200) une modification de conditions de communication pour les utilisateurs dans au moins une desdites sous-zones (1, 2, 3, ...), le calculateur de planification (100) ayant préalablement défini lesdites limites des ressources totales disponibles dans un logique de mutualisation de ressources entre les sous-zones (1, 2, 3, ...) compatible avec différentes attributions des ressources distinctes.

**7.** Système de communication par voie satellitaire selon la revendication 6, **caractérisé en ce qu'**il comprend un calculateur d'allocation dynamique (210) au sein du gestionnaire de ressources et un calculateur de planification (100) en amont du gestionnaire de ressources (200) qui mettent en oeuvre des méthodes de calcul heuristiques pour déterminer une allocation de ressources radio auxdits sous-zones.

Fig. 1

Fig. 2

Fig. 3

Fig. 4

Europäisches
Patentamt

European
Patent Office

Office européen
des brevets

## RAPPORT DE RECHERCHE EUROPEENNE

**Numéro de la demande**

EP 24 21 3194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/062733 A1 (AGARWAL ANIL [US]) 1 mars 2018 (2018-03-01) | 1,6 | INV.<br>H04B7/185 |
| A | * figures 1, 3, 9 *<br>* alinéa [0004] *<br>* alinéa [0047] *<br>* alinéa [0091] - alinéa [0095] * | 2-5,7 | H04W72/50 |
| | ----- | | |
| X | US 2019/245611 A1 (PEPONIDES GEORGE M [US]) 8 août 2019 (2019-08-08) | 1,3,6 | |
| A | * figures 1, 3, 5A, 9, 10 *<br>* alinéa [0022] *<br>* alinéa [0044] *<br>* alinéa [0053] *<br>* alinéa [0076] - alinéa [0083] * | 2,4,5,7 | |
| | ----- | | |

**DOMAINES TECHNIQUES RECHERCHES (IPC)**

H04B
H04W

Le présent rapport a été établi pour toutes les revendications

| Lieu de la recherche | Date d'achèvement de la recherche | Examinateur |
|---|---|---|
| La Haye | 14 avril 2025 | Akhertouz Moreno, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 3194

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-04-2025

| Document brevet cité au rapport de recherche | Date de publication | Membre(s) de la famille de brevet(s) | Date de publication |
|---|---|---|---|
| US 2018062733 A1 | 01-03-2018 | US 2010315949 A1 | 16-12-2010 |
| | | US 2014177521 A1 | 26-06-2014 |
| | | US 2016050014 A1 | 18-02-2016 |
| | | US 2018062733 A1 | 01-03-2018 |
| | | WO 2010148022 A1 | 23-12-2010 |
| US 2019245611 A1 | 08-08-2019 | US 2018234166 A1 | 16-08-2018 |
| | | US 2019245611 A1 | 08-08-2019 |
| | | US 2021050913 A1 | 18-02-2021 |
| | | US 2022190911 A1 | 16-06-2022 |
| | | US 2024022319 A1 | 18-01-2024 |
| | | US 2025119205 A1 | 10-04-2025 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20200328804 A1

- US 11664888 B2